# EUROPÄISCHE PATENTSCHRIFT

(11) **EP 3 346 259 B1**
(45) Veröffentlichungstag und Bekanntmachung des Hinweises auf die Patenterteilung: **16.10.2019**
(21) Anmeldenummer: 17208101.0
(22) Anmeldetag: 18.12.2017
(51) Int. Cl.: G01N 22/00, G01V 3/12

(54) **ANORDNUNG ZUR ELEKTROMAGNETISCHEN TRANSMISSIONSMESSUNG AN OBJEKTEN**
ASSEMBLY FOR ELECTROMAGNETIC TRANSMISSION MEASUREMENTS ON OBJECTS
DISPOSITIF DE MESURE DE TRANSMISSION ÉLECTROMAGNÉTIQUE SUR DES OBJETS

(30) Priorität: 09.01.2017 DE 102017200159
(43) Veröffentlichungstag der Anmeldung: 11.07.2018
(73) Patentinhaber: Fraunhofer-Gesellschaft zur Förderung der angewandten Forschung e.V., 80686 München (DE)
(72) Erfinder: MENDE, Jens-Kristian, 53225 Bonn (DE); NÜßLER, Dirk, 53560 Vettelschoß (DE)
(74) Vertreter: Gagel, Roland

(56) Entgegenhaltungen:
- WO-A2-2014/173831
- DE-B3-102015 203 743
- JP-A- S58 132 213

## Beschreibung

### Technisches Anwendungsgebiet

Die vorliegende Erfindung betrifft eine Anordnung zur elektromagnetischen Transmissionsmessung, die wenigstens einen Strahlungsemitter für elektromagnetische Strahlung und wenigstens einen Strahlungsempfänger für die elektromagnetische Strahlung, ein Abtastvolumen, in dem zu prüfende Objekte von einem aus der elektromagnetischen Strahlung des Strahlungsemitters gebildeten Messstrahlenbündel durchleuchtet werden können, und eine Rotationseinrichtung aufweist, mit der das Messstrahlenbündel im Abtastvolumen auf einem Kreisbogen oder einer Kreisbahn um eine zentrale Achse des Abtastvolumens bewegt werden kann. Eine derartige Anordnung kann beispielsweise zur Transmissionsmessung an Prüfkörpern auf einem Fließband eingesetzt werden, auf dem die Prüfkörper durch das Abtastvolumen der Anordnung bewegt und mit Hochfrequenzstrahlung abgetastet werden.

### Stand der Technik

So zeigt die WO 2014/173831 A2 eine Anordnung zur elektromagnetischen Transmissionsmessung, die im Frequenzbereich zwischen 3GHz und 3THz betrieben werden kann. Bei dieser Anordnung befindet sich eine Sendeantenne auf einem um eine zentrale Achse rotierbaren Antennenträger. Auf der gegenüberliegenden Seite eines Abtastvolumens ist eine Empfangsantenne auf einem ebenfalls um die zentrale Achse rotierbaren Antennenträger angeordnet. Die beiden Antennenträger bewegen sich während der Abtastung synchron zueinander, so dass die von der Sendeantenne abgestrahlte Hochfrequenzstrahlung nach Transmission durch die zu prüfenden Objekte von der Empfangsantenne wieder empfangen und einer Empfangseinrichtung zur Auswertung zugeleitet werden können. Bei der Auswertung werden Amplitude und Phase bestimmt und visualisiert.

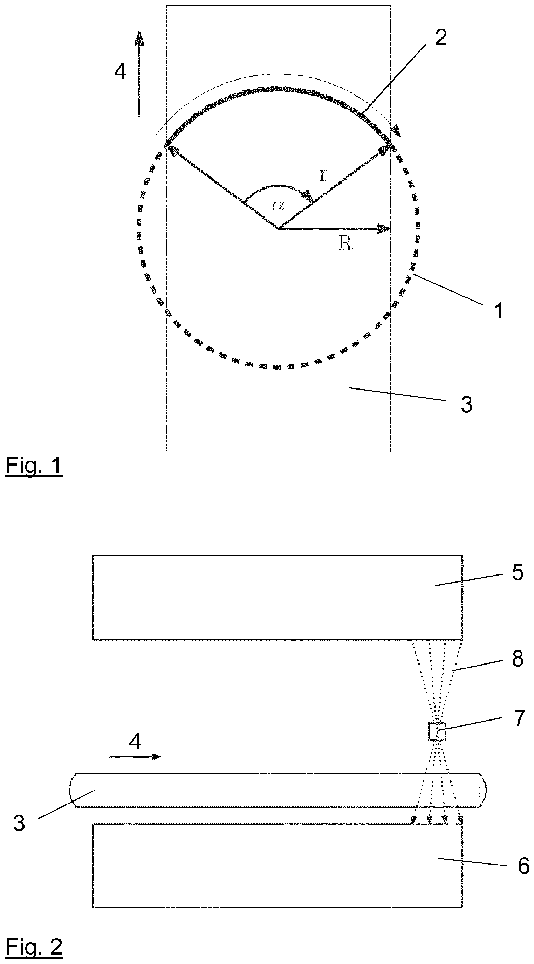

Mit einer derartigen Anordnung werden kontinuierliche Messungen durchgeführt, während sich die Antennen und damit das für die Transmissionsmessung erzeugte Messstrahlenbündel auf einer Kreisbahn bewegen. Figur 1 zeigt hierzu in schematisierter Darstellung ein Beispiel für den Messvorgang. In dieser Figur ist in Draufsicht ein Förderband 3 zu erkennen, das sich in eine Laufrichtung 4 bewegt. Beidseitig des Förderbandes sind die beiden Antennenträger mit der Sende- bzw. Empfangsantenne angeordnet, die in dieser Darstellung nicht explizit zu erkennen sind. Die Figur zeigt die Kreisbahn 1, auf der die beiden Antennen während der Abtastung bewegt werden. Messwerte für die Transmissionsmessungen werden jeweils auf einem Kreisbogen 2 der Kreisbahn 1 aufgenommen, der in der Figur 1 als durchgezogene Linie dargestellt ist. Eine derartige Anordnung ist beispielsweise auch in der Veröffentlichung von D. Nüßler et al., "T-Sense - the New Generation of Non-contact Transmission Imaging with Non-ionizing Radiation", 19th World Conference on Non-Destructive Testing 2016, Seiten 1 bis 8, beschrieben.

Als Strahlungsemitter wurden bei dieser Anordnung Nahfeldsonden in Form von dielektrischen Stiehlstrahlern eingesetzt. Das ist jedoch nur möglich, wenn der Abstand der Antennen nicht allzu groß wird. Derartige Nahfeldsonden haben allerdings den Nachteil, dass sie anfällig für Verbiegungen bei hohen Messgeschwindigkeiten und für Beschädigungen sind, falls ein zu prüfendes Objekt in Kontakt zur Nahfeldsonde kommt.

Auch aus der DE 102015203743 B3 ist eine Anordnung zur Hochfrequenzabtastung bekannt, bei der auf den Antennenträgern jeweils mehrere Antennen angeordnet sind. Die Hochfrequenzleitungen zu den Hochfrequenzantennen weisen Frequenzfilter auf, die jeweils nur einen Frequenzbereich passieren lassen. Auf diese Weise lässt sich die Vorschubgeschwindigkeit von zu prüfenden Objekten, die an der Antennenanordnung vorbeigeführt werden, ohne großen technischen Aufwand bei gleicher Rotationsgeschwindigkeit der Antennenanordnung gegenüber bisherigen Anordnungen erhöhen. Durch die unterschiedlichen Filter erhält jede Antenne eine Frequenzcodierung, die eine örtliche Zuordnung der Antennensignale bei der Auswertung ermöglicht.

Die bisher bekannten Anordnungen lassen sich allerdings nicht oder nur mit hohem Aufwand zu größeren Abtastvolumina hin skalieren. Sie lassen sich daher nicht einfach im industriellen Maßstab auf größere Produktionsstraßen übertragen. So können beispielsweise in der Nahrungsmittelindustrie Inhomogenitäten oder Einschlüsse wie zum Beispiel Metalle oder andere Verunreinigungen ungewollter Art im Produkt auftreten. Mit einem nicht destruktiven Verfahren mit Hilfe elektromagnetischer Radarwellen kann eine geeignete Transmissionsmessung zur Detektion derartiger Inhomogenitäten oder Einschlüsse erfolgen. Dies erfordert jedoch eine entsprechende Skalierbarkeit der zugehörigen Messanordnung.

Weiterhin besteht nach wie vor ein Bedarf an Messanordnungen, die eine höhere Durchlaufgeschwindigkeit der zu überprüfenden Objekte ermöglichen. Ein begrenzender Faktor ist bisher noch immer die mechanische Belastung des rotierbaren Antennenträgers, die mit zunehmender Abtastgeschwindigkeit und auch mit größerer Ausdehnung des Antennenträgers ansteigt.

Die Aufgabe der vorliegenden Erfindung besteht darin, eine gattungsgemäße Anordnung zur elektromagnetischen Transmissionsmessung an Objekten anzugeben, die sich einfacher skalieren lässt und auch höhere Mess- und Abtastgeschwindigkeiten bei der Transmissionsmessung an den Objekten ermöglicht.

### Darstellung der Erfindung

Die Aufgabe wird mit den Anordnungen gemäß den Patentansprüchen 1 und 2 gelöst, von denen eine als Transmissionsanordnung und die andere als Reflexionsanordnung ausgebildet ist. Vorteilhafte Ausgestaltungen der Anordnungen sind Gegenstand der abhängigen Patentansprüche oder lassen der nachfolgenden Beschreibung sowie den Ausführungsbeispielen entnehmen.

Die vorgeschlagene Transmissionsanordnung zur elektromagnetischen Transmissionsmessung an Objekten weist wenigstens einen Strahlungsemitter für elektromagnetische Strahlung und wenigstens einem Strahlungsempfänger für die elektromagnetische Strahlung, ein Abtastvolumen, in dem die Objekte von einem aus der elektromagnetischen Strahlung des Strahlungsemitters gebildeten Messstrahlenbündel durchleuchtet werden können, und eine Rotationseinrichtung auf, mit der das Messstrahlenbündel im Abtastvolumen auf einem Kreisbogen oder einer Kreisbahn um eine zentrale Achse des Abtastvolumens bewegt werden kann. Der oder die Strahlungsemitter und Strahlungsempfänger sind dabei als Hochfrequenzantennen ausgebildet, über die mittels einer Sendeeinrichtung Hochfrequenzsignale gerichtet abgestrahlt bzw. über die mittels einer Empfangseinrichtung die abgestrahlten Hochfrequenzsignale nach dem Durchgang durch das Abtastvolumen wieder empfangen werden können. Bei der vorgeschlagenen Anordnung wird die elektromagnetische Strahlung nicht direkt vom Strahlungsempfänger zum Strahlungsemitter abgestrahlt, sondern über zwei feststehende Reflektoren für die elektromagnetische Strahlung gelenkt, zwischen denen sich das Abtastvolumen befindet. Die beiden Reflektoren liegen sich gegenüber und sind bezüglich ihrer für die Reflexion der elektromagnetischen Strahlung genutzten Reflexionsfläche ring- oder ringabschnittsförmig um die zentrale Achse ausgebildet. Die von dem wenigstens einen Strahlungsemitter abgestrahlte elektromagnetische Strahlung bzw. das aus dieser Strahlung gebildete Messstrahlenbündel wird dabei über die beiden Reflektoren durch das Abtastvolumen hindurch zum Strahlungsempfänger geführt. Die Bezeichnungen ringförmig und ringabschnittsförmig beziehen sich hierbei jeweils auf einen Kreisring und betreffen die Parallelprojektion der für die Reflexion genutzten Reflexionsfläche des jeweiligen Reflektors auf eine Ebene senkrecht zur zentralen Achse.

Die vorgeschlagene Reflexionsanordnung zur elektromagnetischen Transmissionsmessung weist wenigstens einen Strahlungsemitter für elektromagnetische Strahlung und wenigstens einen Strahlungsempfänger für die elektromagnetische Strahlung, ein Abtastvolumen, in dem die Objekte von einem aus der elektromagnetischen Strahlung des Strahlungsemitters gebildeten Messstrahlenbündel durchleuchtet werden können, und eine Rotationseinrichtung auf, mit der das Messstrahlenbündel im Abtastvolumen auf einem Kreisbogen oder einer Kreisbahn um eine zentrale Achse des Abtastvolumens bewegt werden kann. Der Strahlungsemitter kann bei dieser Anordnung auch gleichzeitig als Strahlungsempfänger dienen. Strahlungsemitter und Strahlungsempfänger können auch getrennte Elemente sein. Der oder die Strahlungsemitter und Strahlungsempfänger sind dabei vorzugsweise als Hochfrequenzantennen ausgebildet, über die mittels einer Sendeeinrichtung Hochfrequenzsignale gerichtet abgestrahlt bzw. über die mittels einer Empfangseinrichtung die abgestrahlten Hochfrequenzsignale nach dem Durchgang durch das Abtastvolumen wieder empfangen werden können. Bei der vorgeschlagenen Anordnung wird die elektromagnetische Strahlung nicht direkt vom Strahlungsempfänger in das Abtastvolumen abgestrahlt, sondern über zwei feststehende Reflektoren für die elektromagnetische Strahlung gelenkt, zwischen denen sich das Abtastvolumen befindet. Die beiden Reflektoren liegen sich am Abtastvolumen gegenüber. Der dem Strahlungsemitter am nächsten liegende erste Reflektor ist bezüglich seiner für die Reflexion der elektromagnetischen Strahlung genutzten Reflexionsfläche ring- oder ringabschnittsförmig um die zentrale Achse ausgebildet. Der gegenüberliegende Reflektor dient der Rückreflexion und ggf. einer erneuten Fokussierung der durch das Abtastvolumen hindurch getretenen Strahlung zurück über den ersten Reflektor zum Strahlungsempfänger. Die von dem wenigstens einen Strahlungsemitter abgestrahlte elektromagnetische Strahlung bzw. das aus dieser Strahlung gebildete Messstrahlenbündel wird dabei über die beiden Reflektoren durch das Abtastvolumen hindurch und zurück zum Strahlungsempfänger geführt. Die Bezeichnungen ringförmig und ringabschnittsförmig beziehen sich auch hier jeweils auf einen Kreisring und betreffen die Parallelprojektion der für die Reflexion genutzten Reflexionsfläche des ersten Reflektors auf eine Ebene senkrecht zur zentralen Achse.

Durch diese Ausgestaltung mit den beiden feststehenden, sich gegenüber liegenden Reflektoren, im Folgenden auch als Hauptreflektoren bezeichnet, lässt sich die vorgeschlagene Anordnung auf einfache Weise lediglich durch andere Dimensionierung dieser Hauptreflektoren skalieren. Da die Hauptreflektoren feststehend sind, d.h. insbesondere während der Abtastung nicht rotieren, beeinflusst die Größe dieser Reflektoren auch nicht die maximal mögliche Abtastgeschwindigkeit. Die rotierenden Komponenten, die Teil der Rotationseinrichtung sind, können vielmehr relativ kompakt gehalten werden und ermöglichen damit hohe Rotationsgeschwindigkeiten aufgrund geringerer Fliehkräfte. Damit lässt sich bei gleich großem Abtastvolumen mit der vorgeschlagenen Anordnung eine höhere Mess- und Abtastgeschwindigkeit erzielen als bei den bekannten Anordnungen des Standes der Technik.

In einer ersten vorteilhaften Ausgestaltung der vorgeschlagenen Transmissionsanordnung weist die Rotationseinrichtung einen ersten Träger für den wenigstens einen Strahlungsemitter und einen zweiten Träger für den wenigstens einen Strahlungsempfänger auf, durch die der Strahlungsemitter und der Strahlungsempfänger jeweils auf einer Kreisbahn um die zentrale Achse bewegt werden oder - bei Anordnung von Strahlungsemitter und Strahlungsempfänger auf der zentralen Achse - um die zentrale Achse rotieren. Der Strahlungsemitter ist dabei so auf dem ersten Träger angeordnet, dass er die elektromagnetische Strahlung quer zur zentralen Achse, vorzugsweise senkrecht zur zentralen Achse, auf den ersten der beiden Hauptreflektoren richtet. Der Strahlungsempfänger ist wiederum so auf dem zweiten Träger angeordnet, dass er die elektromagnetische Strahlung nach Durchgang durch das Abtastvolumen quer zur zentralen Achse, vorzugsweise senkrecht zur zentralen Achse, von dem zweiten der beiden Hauptreflektoren wieder empfängt. Die beiden Träger müssen dafür geeignet relativ zu den Hauptreflektoren angeordnet sein und während der Abtastung synchron zueinander bewegt werden, um den Empfang des jeweils auf einem Kreisbogen oder einer Kreisbahn umlaufenden Messstrahlenbündels zu ermöglichen.

Vorzugsweise sind auf jedem Träger mehrere Strahlungsemitter bzw. Strahlungsempfänger zur Bildung mehrere Messstrahlenbündel angeordnet. Die Anordnung ist derart gewählt, dass sich während der Abtastung jeweils ein Strahlungsemitter und ein Strahlungsempfänger am Abtastvolumen gegenüber liegen und auf jedem Träger eine bezüglich der zentralen Achse symmetrische Lastverteilung erreicht wird.

Bei der Nutzung von Sendeantennen auf einem rotierenden Antennenträger ist eine Drehkupplung für die Speisung der Antennen mit Hochfrequenzsignalen erforderlich. Dies gilt in gleicher Weise für die Weiterleitung der empfangenen Hochfrequenzsignale von den Empfangsantennen zu einer Empfangseinrichtung. Derartige Drehkupplungen sind einem Verschleiß unterworfen und arbeiten in der Regel nur in einem eingeschränkten Frequenzbereich für die Übertragung der Hochfrequenzsignale. Im Folgenden wird eine vorteilhafte Ausgestaltung der vorgeschlagenen Anordnung beschrieben, die ohne derartige Drehkupplungen auskommt. Hierzu weist die Rotationseinrichtung ein erstes und ein zweites um die zentrale Achse rotierbares Strahlumlenkelement auf, in der vorliegenden Patentanmeldung auch als Subreflektor bezeichnet. Der Strahlungsemitter ist dabei so angeordnet, dass er die elektromagnetische Strahlung - vorzugsweise zumindest annähernd parallel zur zentralen Achse - auf das erste Strahlumlenkelement der Rotationseinrichtung richtet, das die elektromagnetische Strahlung zumindest während eines Teils seiner Rotation auf den ersten Hauptreflektor umlenkt, während es um die zentrale Achse rotiert. Die vom zweiten Hauptreflektor nach Durchgang durch das Abtastvolumen reflektierte elektromagnetische Strahlung wird dann durch das zweite Strahlumlenkelement - vorzugsweise annähernd parallel zur zentralen Achse - auf den Strahlungsempfänger gerichtet, während es synchron zum ersten Strahlumlenkelement um die zentrale Achse rotiert. Auf diese Weise können Strahlungsemitter und Strahlungsempfänger ortsfest angeordnet werden und müssen nicht rotieren. Die Erzeugung der Bewegung des Messstrahlenbündels auf einem Kreisbogen oder einer Kreisbahn wird vielmehr durch das rotierende erste Strahlumlenkelement in Verbindung mit der Reflektion am ersten Hauptreflektor erreicht. Die Rückführung des umlaufenden Messstrahlenbündels nach Durchlauf durch das Abtastvolumen wird über die Kombination aus zweitem Hauptreflektor und rotierendem zweiten Strahlumlenkelement sichergestellt. Damit kann bei dieser Anordnung vollständig auf Drehkupplungen verzichtet werden so dass die Anordnung in dieser Ausgestaltung auch einem deutlich geringeren Verschleiß unterworfen ist. Durch die geringen Fliehkräfte der rotierenden Strahlumlenkelemente werden hohe Rotationsgeschwindigkeiten und damit auch hohe Messgeschwindigkeiten erreicht.

Die Hauptreflektoren weisen bei der vorgeschlagenen Transmissionsanordnung vorzugsweise gekrümmte Reflexionsflächen auf, durch die die elektromagnetische Strahlung auf eine Fokusebene zwischen den beiden Hauptreflektoren fokussiert wird. Die beiden Hauptreflektoren dienen in dieser Ausgestaltung daher nicht nur zur Strahlführung, sondern auch der Strahlformung. In der Ausgestaltung mit den zusätzlichen Subreflektoren können diese ebenfalls gekrümmt ausgeführt sein, um damit auch eine Strahlformung zu ermöglichen.

Vorzugsweise sind die beiden Hauptreflektoren jeweils bezüglich der Fokalebene spiegelsymmetrisch angeordnet und ausgebildet. Durch die ring- oder ringabschnittsförmige Ausgestaltung wird jeweils eine zentrale Öffnung für strahlführende Komponenten der Rotationseinrichtung, insbesondere Träger bzw. Subreflektoren, gewährleistet.

Die Reflexionsanordnung kann vergleichbare Ausgestaltungen wie die Transmissionsanordnung aufweisen. In diesem Fall muss dann nur auf der Seite des ersten Hauptreflektors die entsprechende Rotationseinrichtung mit dem Träger oder dem Strahlumlenkelement vorgesehen sein. Der dem ersten Hauptreflektor gegenüber liegende zweite Hauptreflektor muss lediglich die Rückreflexion der eintreffenden Strahlung auf dem gleichen Strahlweg gewährleisten und kann beispielsweise als einfacher planer Reflektor ausgebildet sein. Bei einer Fokussierung des Messstrahlenbündels durch den ersten Hauptreflektor sollte der zweite Hauptreflektor für die Rückreflexion auch eine entsprechend gekrümmte Reflexionsfläche aufweisen, die sich ringförmig oder ringabschnittsförmig um die zentrale Achse erstreckt.

Die vorgeschlagenen Anordnungen zeichnen sich vor allem durch die Nutzung feststehender Hauptreflektoren aus, durch die sich die Anordnung gegenüber bekannten Anordnungen einfacher skalieren lässt und eine kompaktere Ausführung der rotierenden Komponenten und damit eine höhere Messgeschwindigkeit ermöglicht. Die Anordnungen lassen sich beispielsweise in Produktionsanlagen für die nicht destruktive Untersuchung von Produkten auf Homogenität und/oder Materialeinschlüsse einsetzen. Auch andere Anwendungen sind selbstverständlich möglich, bei denen eine Transmissionsmessung an einem Objekt durchgeführt werden soll, das dann für die Messung bzw. Abtastung durch das Abtastvolumen der Anordnung bewegt wird.

### Kurze Beschreibung der Zeichnungen

Die vorgeschlagenen Anordnungen werden nachfolgend anhand von Ausführungsbeispielen in Verbindung mit den Zeichnungen nochmals näher erläutert. Hierbei zeigen:
- Fig. 1: eine schematische Darstellung der Abtastung entlang eines Kreisbogens;
- Fig. 2: eine schematische Darstellung eines beispielhaften Aufbaus der Anordnung in einer Seitenansicht;
- Fig. 3: eine schematische Darstellung einer beispielhaften Anordnung der beiden Hauptreflektoren bei der vorgeschlagenen Anordnung;
- Fig. 4: eine schematische Darstellung einer beispielhaften Antennenanordnung an der Rotationseinrichtung in einer Ausgestaltung der vorgeschlagenen Anordnung in Seitenansicht und Draufsicht;
- Fig. 5: eine schematische Darstellung eines beispielhaften Aufbaus der vorgeschlagenen Anordnung mit der Antennenanordnung der Figur 4;
- Fig. 6: eine perspektivische Darstellung des Beispiels der Figur 5;
- Fig. 7: eine schematische Darstellung eines weiteren beispielhaften Aufbaus der vorgeschlagenen Anordnung; und
- Fig. 8: eine schematische Darstellung eines weiteren beispielhaften Aufbaus der vorgeschlagenen Anordnung.

### Wege zur Ausführung der Erfindung

Die vorgeschlagenen Anordnungen werden nachfolgend anhand einer Anwendung nochmals näher erläutert, bei der die zu prüfenden Objekte mittels Hochfrequenzstrahlung, beispielsweise im Bereich zwischen 3GHz und 3THz, abgetastet werden. Als Strahlungsemitter und Strahlungsempfänger werden hierfür entsprechende Hochfrequenzantennen eingesetzt, wie sie aus dem Stand der Technik bekannt sind. Die zu überprüfenden Objekte werden auf einem Förderband 3 durch das Abtastvolumen geführt, während das Messstrahlenbündel auf einer Kreisbahn 1 bewegt wird, wie dies in der Figur 1 in Draufsicht auf das Förderband 3 zu erkennen ist. Diese kreisbahnförmige Bewegung des Messstrahlenbündels wird sowohl bei den eingangs beschriebenen Anordnungen des Standes der Technik als auch bei einer Ausgestaltung der vorgeschlagenen Anordnung für die Abtastung genutzt.

Figur 2 zeigt in stark schematisierter Darstellung ein Beispiel für den Aufbau der vorgeschlagenen Anordnung in Seitenansicht. Die Anordnung umfasst in dieser Darstellung ein oberes Antennensystem 5 (Transmitter) und ein unteres Antennensystem 6 (Receiver), zwischen denen ein Messstrahlenbündel auf einer Kreisbahn durch ein Abtastvolumen geführt wird, das sich zwischen dem oberen Antennensystem 5 und dem unteren Antennensystem 6 befindet. Die in dieser und den nachfolgenden Figuren nicht dargestellten Objekte werden bei der Abtastung bzw. Messung einem Förderband 3 durch das Abtastvolumen bewegt, dessen Bewegungsrichtung 4 in dieser und den nachfolgenden Figuren mit einem Pfeil angedeutet ist. Das Messstrahlenbündel wird dabei bevorzugt auf eine Fokalebene im Abtastvolumen fokussiert, wie dies durch den Fokalfleck 7 in der Figur 2 angedeutet ist. Der Fokalfleck 7 ist der Punkt, an dem die elektromagnetische Welle gebündelt und das jeweilige Objekt abgetastet werden soll. Die Strahlenwege 8 der elektromagnetischen Strahlung sind in der Figur ebenfalls angedeutet. Die Bündelung der elektromagnetischen Strahlung zur Formung eines Messstrahlenbündels wird bei der vorgeschlagenen Anordnung vorzugsweise mit dem oberen der beiden Hauptreflektoren erreicht. Bei den in diesen Ausführungsbeispielen dargestellten Anordnungen wird die elektromagnetische Strahlung wie bisher auf dem kürzesten Weg durch das Prüfobjekt gerichtet, so dass es senkrecht durch das Objekt bzw. das Förderband 3 hindurchtreten muss. Die Fokalebene stellt dabei gleichzeitig die Ebene dar, an der das Antennensystem auf der Transmitterseite gespiegelt wird, um das Receiversystem zu erhalten. Die beiden Systeme sind vom Aufbau identisch, aber spiegelsymmetrisch.

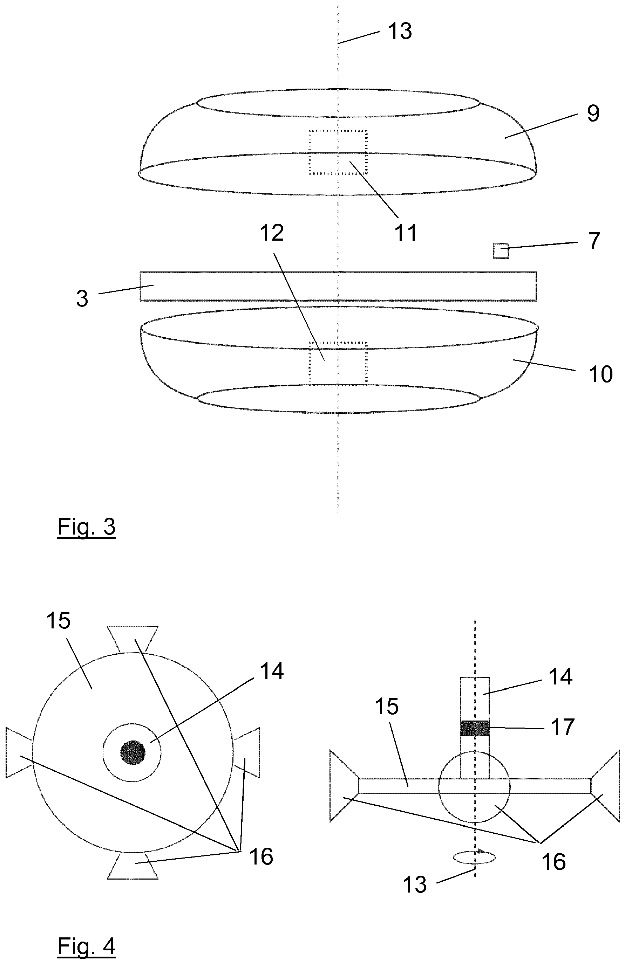

Das zentrale Element der vorgeschlagenen Anordnung sind zwei ortsfeste, ring- oder ringabschnittsförmige Hauptreflektoren 9, 10. Diese befinden sich oberhalb und unterhalb des Fließbandes 3, wie dies in der Figur 3 schematisch dargestellt ist. Der obere Hauptreflektor 9 sorgt dafür, dass ein von einer Strahlungsquelle 11, beispielsweise ein Strahlungsemitter oder ein Umlenkelement für die Strahlung, ausgehender elektromagnetischer Strahl umgelenkt und auf den Fokalfleck 7 fokussiert wird. Anschließend wird dieser Strahl durch den unteren Hauptreflektor 10 wiederum auf die Strahlungssenke 12 gerichtet, beispielsweise einen Strahlungsempfänger oder ein Strahlumlenkelement. Die Strahlenwege werden mit den beiden Hauptreflektoren 9, 10 somit von der Strahlungsquelle 11 über den Fokalfleck 7 zur Strahlungssenke geführt. Die Reflektoren 9, 10 sind in diesem Beispiel rotationssymmetrisch um die zentrale Achse 13. Damit muss nicht die komplette Anordnung während der Abtastung gedreht werden, sondern lediglich die Strahlungsquelle 11 und die Strahlungssenke 12. Bei dieser Anordnung kann somit eine Fokussierung durch den oberen Hauptreflektor 9 vorgenommen werden. Dadurch wird eine präzisere Rasterung der Messpunkte während der Abtastung ermöglicht. Der Abstand der beiden Hauptreflektoren 9, 10 ist frei skalierbar. Die Lage der Messpunkte ist über den Radius und die Krümmung der Reflektoren bestimmt. Somit ist auf einfache Weise auch eine Übertragung auf größere Systeme bzw. Abtastvolumina möglich. Die Rotations- und damit die Messgeschwindigkeit kann drastisch erhöht werden, weil eine deutlich geringere Masse für die Abtastung rotiert werden muss. Die Ausgestaltung von Strahlungsquelle und Strahlungssenke ist frei wählbar.

Figur 4 zeigt ein Beispiel für eine Antennenanordnung an einer Rotationseinrichtung, wie sie bei der vorgeschlagenen Abtast- bzw. Transmissionsanordnung eingesetzt werden kann. In diesem Beispiel treffen die von den Sendeantennen emittierten Strahlenbündel horizontal auf den oberen Hauptreflektor 9 und werden vom unteren Hauptreflektor 10 horizontal auf die jeweiligen Empfangsantennen gelenkt. Die Antennen strahlen dabei jeweils direkt horizontal ab bzw. empfangen horizontal. Figur 4 zeigt eine Ausgestaltung, bei der vier horizontal abstrahlende Antennen 16 auf einem Antennenträger 15 angeordnet sind, der ein entsprechendes Speisenetzwerk beinhaltet. Die Speisung kann über einen Signaleingang 14 mit Hohlleiterführung über eine Hohlleiterdrehkupplung 17 vorgenommen werden. Die Antennensignale werden dabei vorzugsweise durch Filter separiert. Dies bringt eine Leistungsverteilung mit sich. Durch die symmetrische Lastverteilung der vier auf dem Antennenträger 15 symmetrisch angeordneten Antennen 16 kann eine höhere Abtastrate wie mit einer einzelnen Antenne erzielt werden. Die vier Antennen sind 90° zueinander versetzt. Im linken Teil der Figur ist die Anordnung in Draufsicht, im rechten Teil der Figur in Seitenansicht zu erkennen. Der Antennenträger wird um die zentrale Achse 13 während der Abtastung rotiert.

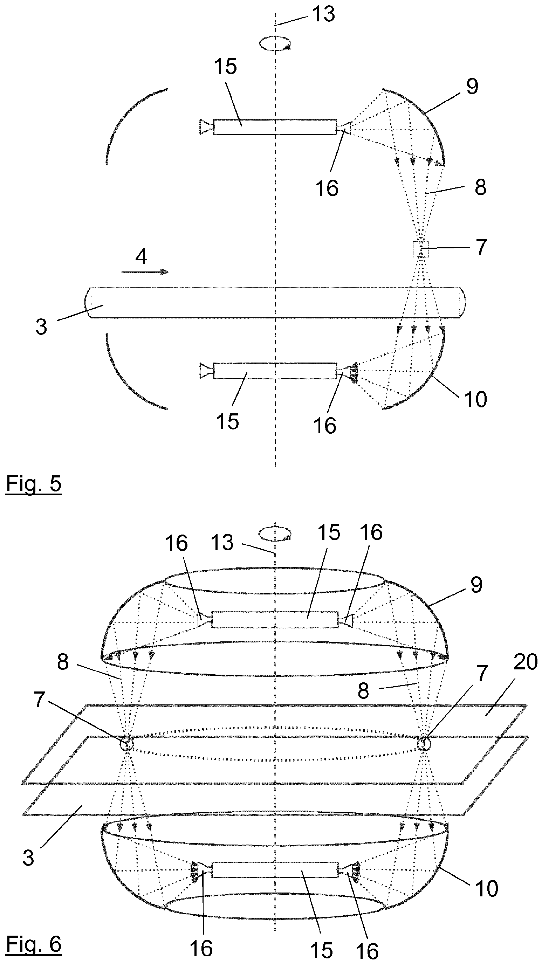

Figur 5 zeigt ein Beispiel für die vorgeschlagene Anordnung, bei der jeweils die Antennenanordnung der Figur 4 für die Emission und für den Empfang der Hochfrequenzsignale eingesetzt wird. Der Antennenträger 15 ist hierbei innerhalb der Öffnung des ringförmigen Hauptreflektors 9 angeordnet, so dass die von den Antennen 16 emittierten Strahlenbündel über den Hauptreflektor 9 durch das Abtastvolumen hindurch auf den unteren Hauptreflektor 10 reflektiert werden, der diese wiederum auf die korrespondierenden Antennen 16 des unteren Antennenträgers 15 richtet. Der Strahlenweg 8 ist für eine der Antennen 16 in der Figur 5 wiederum schematisch angedeutet. Während der Abtastung rotieren die Antennenträger 15 um die zentrale Achse 13, so dass sich in diesem Beispiel vier Messstrahlenbündel entsprechend den vier um 90° zueinander versetzten Antennen auf einer Kreisbahn durch das Abtastvolumen zwischen den beiden Hauptreflektoren 9, 10 bewegen. Der Vorteil dieser Anordnung ist eine gleichmäßigere Lastverteilung auf den rotierenden Trägern 15 durch die symmetrische bzw. gleich verteilte Anordnung der Antennen. Figur 6 zeigt eine perspektivische Darstellung der Anordnung der Figur 5, in der auch die Fokusebene 20 sowie die Strahlenwege 8 von zwei der Antennen 16 angedeutet sind.

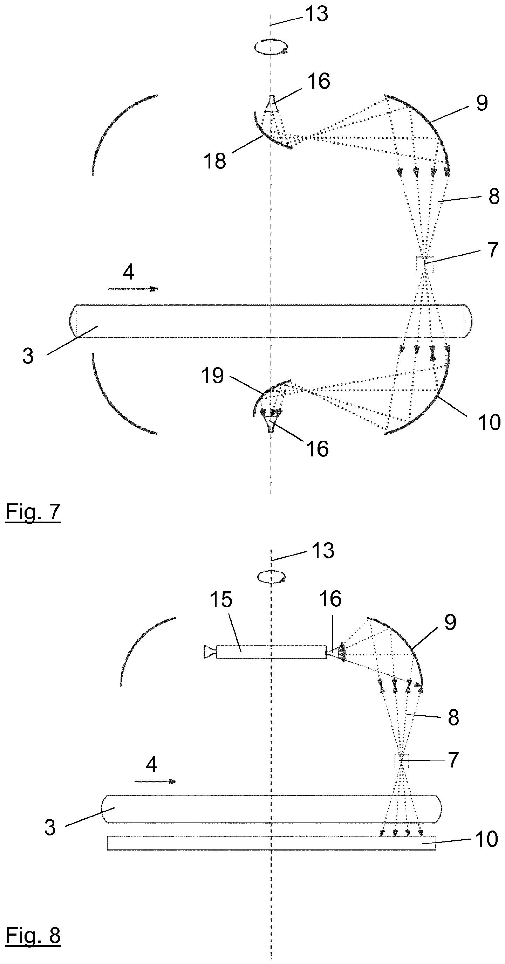

Im Folgenden wird anhand von Figur 7 eine besonders kompakte Ausgestaltung der vorgeschlagenen Anordnung beschrieben, die eine sehr hohe Messgeschwindigkeit ermöglicht. Diese Anordnung besteht aus nur einer Sendeantenne 16, welche senkrecht nach unten abstrahlt und deren Strahlenbündel durch einen Subreflektor 18 horizontal ausgelenkt werden kann. Der Subreflektor 18 ist in diesem Beispiel als Ellipsoidausschnitt ausgelegt und besitzt die Möglichkeit, zwischen dem Hauptreflektor 9 und dem Subreflektor 18 einen Fokalpunkt zu erzeugen. Dadurch kann der weitere Strahlenverlauf maßgeblich beeinflusst werden. Das jeweilige Strahlenbündel wird dabei in gleicher Weise wie bei Figur 5 in das Abtastvolumen fokussiert und über den unteren Hauptreflektor 10 und einen weiteren Subreflektor 19 auf eine Empfangsantenne 16 gerichtet, die mit ihrer Empfangsrichtung parallel zur zentralen Achse 13 ausgerichtet ist. Die beiden Subreflektoren 18, 19 rotieren um diese zentrale Achse 13, um das auf einer Kreisbahn rotierende Messstrahlenbündel zu erzeugen, das in der Figur 7 durch die Strahlenwege 8 angedeutet ist. Die einzigen rotierenden Komponenten dieser Anordnung sind somit die beiden Subreflektoren 18, 19. Dadurch muss kaum Last bewegt werden und damit kann die Rotations- und Messgeschwindigkeit extrem gesteigert werden. Des Weiteren wird bei dieser Anordnung Material eingespart, da das Netzwerk nicht gefertigt werden muss, keine Drehkupplungen erforderlich sind und jeweils nur eine Antenne zum Senden und zum Empfang benötigt wird.

Während in den vorangehenden Figuren Beispiele für die vorgeschlagene Transmissionsanordnung darstellt sind, zeigt Figur 8 ein Beispiel für die vorgeschlagene Reflexionsanordnung. Bei dieser Anordnung wird wiederum die Antennenanordnung der Figur 4 eingesetzt, wobei diesmal jede der Antennen 16 sowohl für die Emission als auch für den Empfang der Hochfrequenzsignale genutzt werden. Der Antennenträger 15 ist wie bei Figur 5 innerhalb der Öffnung des oberen ringförmigen Hauptreflektors 9 angeordnet, so dass die von den Antennen 16 emittierten Strahlenbündel über den Hauptreflektor 9 durch das Abtastvolumen hindurch auf den unteren Hauptreflektor 10 reflektiert werden. Dieser untere Hauptreflektor ist so ausgebildet, dass er die auftreffenden Strahlenbündel wieder in sich zurück reflektiert, wie dies in der Figur 8 angedeutet ist. Die Strahlenbündel werden damit nach doppeltem Durchlauf durch das Abtastvolumen und den oberen Hauptreflektor 9 von den Antennen 16 wieder empfangen. Der untere Hauptreflektor 10 ist in diesem Beispiel nur schematisch angedeutet. Er kann im einfachsten Fall plan ausgebildet sein.

In den vorangegangenen Beispielen wurden jeweils ein oder zwei ringförmige und somit bezüglich der zentralen Achse rotationssymmetrische Hauptreflektoren eingesetzt, durch die das Messstrahlenbündel auf einer Kreisbahn um die zentrale Achse bewegt wird. Da für die Abtastung jedoch häufig nur ein Abschnitt der Kreisbahn genutzt wird, wie in Figur 1 durch den Kreisbogen 2 angedeutet, müssen die Hauptreflektoren nicht zwangsläufig rotationssymmetrisch sein. Sie können daher auch nur ringabschnittsförmig ausgebildet sein, um das Messstrahlenbündel entsprechend nur auf dem gewünschten Kreisbogen, d.h. einem Abschnitt einer Kreisbahn, zu bewegen.

### Bezugszeichenliste

- 1: Kreisbahn
- 2: Kreisbogen
- 3: Förderband
- 4: Laufrichtung des Förderbands
- 5: Oberes Antennensystem (Transmitter)
- 6: Unteres Antennensystem (Receiver)
- 7: Fokalfleck bzw. Abtastpunkt
- 8: Strahlenwege
- 9: Oberer Hauptreflektor
- 10: Unterer Hauptreflektor bzw. Reflexionsfläche
- 11: Strahlungsquelle
- 12: Strahlungssenke
- 13: Zentrale Achse
- 14: Signaleingang mit Hohlleiterführung
- 15: Antennenträger mit Speisenetzwerk
- 16: Antennen
- 17: Drehkupplung
- 18: Rotierender Subreflektor oben
- 19: Rotierender Subreflektor unten
- 20: Fokusebene

## Patentansprüche

1. Anordnung zur elektromagnetischen Transmissionsmessung an Objekten, die
- wenigstens einen Strahlungsemitter (11, 16) für elektromagnetische Strahlung und wenigstens einen Strahlungsempfänger (12, 16) für die elektromagnetische Strahlung, die als Antennen für Hochfrequenzstrahlung ausgebildet sind,
- ein Abtastvolumen, in dem die Objekte von einem aus der elektromagnetischen Strahlung des Strahlungsemitters (11, 16) gebildeten Messstrahlenbündel durchleuchtet werden können, und
- eine Rotationseinrichtung aufweist, mit der das Messstrahlenbündel im Abtastvolumen auf einem Kreisbogen (2) oder einer Kreisbahn (1) um eine zentrale Achse (13) des Abtastvolumens bewegt werden kann,
**dadurch gekennzeichnet,**
**dass** das Abtastvolumen zwischen zwei feststehenden, sich gegenüber liegenden und mit wenigstens einem Teil ihrer Reflexionsfläche ring- oder ringabschnittsförmig um die zentrale Achse (13) ausgebildeten Reflektoren (9, 10) für die elektromagnetische Strahlung angeordnet ist, über die das Messstrahlenbündel durch das Abtastvolumen zum Strahlungsempfänger (12, 16) geführt wird.

2. Anordnung zur elektromagnetischen Transmissionsmessung an Objekten, die
- wenigstens einen Strahlungsemitter (11, 16) für elektromagnetische Strahlung und wenigstens einen Strahlungsempfänger für die elektromagnetische Strahlung, die als Antennen für Hochfrequenzstrahlung ausgebildet sind,
- ein Abtastvolumen, in dem die Objekte von einem aus der elektromagnetischen Strahlung des Strahlungsemitters (11, 16) gebildeten Messstrahlenbündel durchleuchtet werden können, und
- eine Rotationseinrichtung aufweist, mit der das Messstrahlenbündel im Abtastvolumen auf einem Kreisbogen (2) oder einer Kreisbahn (1) um eine zentrale Achse (13) des Abtastvolumens bewegt werden kann,
**dadurch gekennzeichnet,**
**dass** das Abtastvolumen zwischen zwei feststehenden, sich gegenüber liegenden Reflektoren (9, 10) für die elektromagnetische Strahlung angeordnet ist, über die das Messstrahlenbündel durch das Abtastvolumen und wieder zurück zum Strahlungsempfänger geführt wird, wobei ein erster der beiden Reflektoren (9), der dem Strahlungsemitter (11, 16) am nächsten liegt, mit wenigstens einem Teil seiner Reflexionsfläche ring- oder ringabschnittsförmig um die zentrale Achse (13) ausgebildet ist.

3. Anordnung nach Anspruch 1,
**dadurch gekennzeichnet,**
**dass** die Rotationseinrichtung einen ersten Träger (15) für den wenigstens einen Strahlungsemitter (11, 16) und einen zweiten Träger (15) für den wenigstens einen Strahlungsempfänger (12, 16) aufweist, durch die der Strahlungsemitter (11, 16) und der Strahlungsempfänger (12, 16) jeweils auf einer Kreisbahn (1) um die zentrale Achse (13) bewegt werden oder um die zentrale Achse (13) rotieren, wobei der Strahlungsemitter (11, 16) so auf dem ersten Träger (15) angeordnet ist, dass er die elektromagnetische Strahlung quer zur zentralen Achse (13) auf einen ersten der beiden Reflektoren (9) richtet, und der Strahlungsempfänger (12, 16) so auf dem zweiten Träger (15) angeordnet ist, dass er die elektromagnetische Strahlung nach Durchgang durch das Abtastvolumen von einem zweiten der der beiden Reflektoren (10) quer zur zentralen Achse (13) empfängt.

4. Anordnung nach Anspruch 3,
**dadurch gekennzeichnet,**
**dass** die Anordnung mehrere der Strahlungsemitter (16) zur Bildung mehrerer Messstrahlenbündel und mehrere der Strahlungsempfänger (16) aufweist, die so auf dem ersten und zweiten Träger (15) angeordnet sind, dass sich jeweils ein Strahlungsemitter (16) und ein Strahlungsempfänger (16) gegenüber liegen und eine bezüglich der zentralen Achse (13) symmetrische Lastverteilung erreicht wird.

5. Anordnung nach Anspruch 1,
**dadurch gekennzeichnet,**
**dass** die Rotationseinrichtung ein erstes und ein zweites um die zentrale Achse (13) rotierbares Strahlumlenkelement (18, 19) aufweist, wobei der Strahlungsemitter (16) und das erste Strahlumlenkelement (18) so angeordnet sind, dass der Strahlungsemitter (16) die elektromagnetische Strahlung auf das erste Strahlumlenkelement (18) der Rotationseinrichtung richtet, das die elektromagnetische Strahlung zumindest während eines Teils seiner Rotation auf einen ersten der beiden Reflektoren (9) umlenkt, während es und um die zentrale Achse (13) rotiert, und wobei der Strahlungsempfänger (16) und das zweite Strahlumlenkelement (18) so angeordnet sind, dass die nach Durchgang durch das Abtastvolumen von einem zweiten der beiden Reflektoren (10) reflektierte elektromagnetische Strahlung durch das zweite Strahlumlenkelement (19) auf den Strahlungsempfänger (16) gerichtet wird, während es synchron zum ersten Strahlumlenkelement (18) um die zentrale Achse (13) rotiert.

6. Anordnung nach einem der Ansprüche 3 bis 5,
**dadurch gekennzeichnet,**
**dass** der erste Reflektor (9) eine gekrümmte Reflexionsfläche aufweist, durch die die elektromagnetische Strahlung auf eine Fokalebene im Abtastvolumen fokussiert wird.

7. Anordnung nach Anspruch 6,
**dadurch gekennzeichnet,**
**dass** die beiden Reflektoren (9, 10) bezüglich der Fokalebene spiegelsymmetrisch angeordnet und ausgebildet sind.

8. Anordnung nach einem der Ansprüche 1 und 3 bis 7,
**dadurch gekennzeichnet,**
**dass** der wenigstens eine Strahlungsemitter (16) mit einer Sendeeinrichtung und der wenigstens eine Strahlungsempfänger (16) mit einer Empfangseinrichtung verbunden sind.

9. Anordnung nach einem der Ansprüche 1 und 3 bis 8,
**dadurch gekennzeichnet,**
**dass** die beiden Reflektoren (9, 10) rotationssymmetrisch ausgebildet sind.

10. Anordnung nach Anspruch 2,
**dadurch gekennzeichnet,**
**dass** die Rotationseinrichtung einen Träger (15) für den wenigstens einen Strahlungsemitter (11, 16) aufweist, durch den der Strahlungsemitter (11, 16) auf einer Kreisbahn (1) um die zentrale Achse (13) bewegt wird oder um die zentrale Achse (13) rotiert, wobei der Strahlungsemitter (11, 16) so auf dem Träger (15) angeordnet ist, dass er die elektromagnetische Strahlung quer zur zentralen Achse (13) auf den ersten Reflektor (9) richtet.

11. Anordnung nach Anspruch 10,
**dadurch gekennzeichnet,**
**dass** die Anordnung mehrere der Strahlungsemitter (16) zur Bildung mehrerer Messstrahlenbündel aufweist, die so auf dem Träger (15) angeordnet sind, dass eine bezüglich der zentralen Achse (13) symmetrische Lastverteilung erreicht wird.

12. Anordnung nach Anspruch 2,
**dadurch gekennzeichnet,**
**dass** die Rotationseinrichtung ein um die zentrale Achse (13) rotierbares Strahlumlenkelement (18) aufweist, wobei der Strahlungsemitter (16) und das Strahlumlenkelement (18) so angeordnet sind, dass der Strahlungsemitter (16) die elektromagnetische Strahlung auf das Strahlumlenkelement (18) der Rotationseinrichtung richtet, das die elektromagnetische Strahlung zumindest während eines Teils seiner Rotation auf den ersten Reflektor (9) umlenkt, während es und um die zentrale Achse (13) rotiert.

13. Anordnung nach einem der Ansprüche 10 bis 12,
**dadurch gekennzeichnet,**
**dass** der erste Reflektor (9) eine gekrümmte Reflexionsfläche aufweist, durch die die elektromagnetische Strahlung auf eine Fokalebene im Abtastvolumen fokussiert wird.

14. Anordnung nach einem der Ansprüche 2 und 10 bis 13, **dadurch gekennzeichnet,**
**dass** der wenigstens eine Strahlungsemitter (16) und Strahlungsempfänger jeweils mit einer Sende- und Empfangseinrichtung verbunden ist.

## Claims

1. Assembly for electromagnetic transmission measurements on objects, which comprises
- at least one radiation emitter (11, 16) for electromagnetic radiation and at least one radiation receiver (12, 16) for the electromagnetic radiation, which are constructed as antennas for high frequency radiation,
- a sampling volume, in which the objects can be irradiated by a measuring beam bundle formed from the electromagnetic radiation of the radiation emitter (11, 16), and
- a rotation device, with which the measuring beam bundle can be moved in the sampling volume along a circular arc (2) or a circular path (1) about a central axis (13) of the sampling volume, **characterized in that**
the sampling volume is arranged between two stationary reflectors (9, 10) for the electromagnetic radiation positioned opposite one another, at least part of the reflective surface of which reflectors being constructed in a ring or a ring segment about the central axis (13), via which reflectors the measuring beam bundle is guided to the radiation receiver (12, 16) through the sampling volume.

2. Assembly for electromagnetic transmission measurements on objects, which comprises
- at least one radiation emitter (11, 16) for electromagnetic radiation and at least one radiation receiver for the electromagnetic radiation, which are constructed as antennas for high frequency radiation,
- a sampling volume, in which the objects can be irradiated by a measuring beam bundle formed from the electromagnetic radiation of the radiation emitter (11, 16), and
- a rotation device, with which the measuring beam bundle can be moved in the sampling volume along a circular arc (2) or a circular path (1) about a central axis (13) of the sampling volume, **characterized in that**
the sampling volume is arranged between two stationary reflectors (9, 10) for the electromagnetic radiation positioned opposite one another, via which the measuring beam bundle is guided through the sampling volume and back again to the radiation receiver, wherein a first of the two reflectors (9), which is positioned closest to the radiation emitter (11, 16) is constructed with at least a part of its reflective surface in a ring or ring segment about the central axis (13).

3. Assembly according to Claim 1,
**characterized in that**
the rotation device has a first support (15) for the at least one radiation emitter (11, 16) and a second support (15) for the at least one radiation receiver (12, 16), by which the radiation emitter (11, 16) and the radiation receiver (12, 16) are each moved on a circular path (1) about the central axis (13) or rotated about the central axis (13), wherein the radiation emitter (11, 16) is arranged on the first support (15) in such manner that it directs the electromagnetic radiation towards a first of the two reflectors (9) transversely to the central axis (13), and the radiation receiver (12, 16) is arranged on the second support (15) in such manner that it receives the electromagnetic radiation which has passed through the sampling volume from a second of the two reflectors (10) transversely to the central axis (13).

4. Assembly according to Claim 3,
**characterized in that**
the assembly includes a plurality of the radiation emitters (16) for forming a plurality of measuring beam bundles and a plurality of the radiation receivers (16), which are arranged on the first and the second supports (15) in such manner that one radiation emitter (16) and one radiation receiver (16) are positioned opposite one another in each case and a load distribution is achieved which is symmetrical with respect to the central axis (13).

5. Assembly according to Claim 1,
**characterized in that**
the rotation device has a first and a second beam deflection element (18, 19), which are rotatable about the central axis (13), wherein the radiation emitter (16) and the first beam deflection element (18) are arranged in such manner that the radiation emitter (16) directs the electromagnetic radiation towards the first beam deflection element (18) of the rotation device, which deflects the electromagnetic radiation towards a first of the two reflectors (9) during at least a part of its rotation while it rotates about the central axis (13), and wherein the radiation receiver (16) and the second beam deflection element (18) are arranged in such manner that the electromagnetic radiation which is reflected by a second of the two reflectors (10) after passing through the sampling volume is directed towards the radiation receiver (16) via the second beam deflection element (19), while it rotates about the central axis (13) synchronously with the first beam deflection element (18).

6. Assembly according to any one of Claims 3 to 5,
**characterized in that**
the first reflector (9) has a curved reflective surface, by which the electromagnetic radiation is focused on a focal plane in the sampling volume.

7. Assembly according to Claim 6,
**characterized in that**
the two reflectors (9, 10) are arranged and constructed in mirror-symmetrical manner with respect to the focal plane.

8. Assembly according to any one of Claims 1 and 3 to 7,
**characterized in that**
the at least one radiation emitter (16) is connected to a transmitting device and the at least one radiation receiver (16) is connected to a receiving device.

9. Assembly according to any one of Claims 1 and 3 to 8,
**characterized in that**
both reflectors (9, 10) are constructed to be rotationally symmetrical.

10. Assembly according to Claim 2,
**characterized in that**
the rotation device has a support (15) for the at least one radiation emitter (11, 16), by which the radiation emitter (11, 16) is moved on a circular path (1) about the central axis (13) or is rotated about the central axis (13), wherein the radiation emitter (11, 16) is arranged on the support (15) in such manner that it directs the electromagnetic radiation towards the first reflector (9) transversely to the central axis (13).

11. Assembly according to Claim 10,
**characterized in that**
the assembly includes a plurality of the radiation emitters (16) for forming a plurality of measuring beam bundles, which are arranged on the support (15) in such manner that a load distribution is achieved which is symmetrical with respect to the central axis (13) .

12. Assembly according to Claim 2,
**characterized in that**
the rotation device has a beam deflection element (18) which is rotatable about the central axis (13), wherein the radiation emitter (16) and the beam deflection element (18) are arranged in such manner that the radiation emitter (16) directs the electromagnetic radiation towards the beam deflection element (18) of the rotation device, which element deflects the electromagnetic radiation towards the first reflector (9) during at least a part of its rotation while it rotates about the central axis (13).

13. Assembly according to any one of Claims 10 to 12,
**characterized in that**
the first reflector (9) has a curved reflective surface, by which the electromagnetic radiation is focused on a focal plane in the sampling volume.

14. Assembly according to any one of Claims 2 and 10 to 13,
**characterized in that**
the at least one radiation emitter (16) and radiation receiver is connected respectively to a transmitting and receiving device.

## Revendications

1. Dispositif de mesure de transmission électromagnétique sur des objets, qui :
- présente au moins un émetteur de rayonnement (11,16) pour le rayonnement électromagnétique et au moins un récepteur de rayonnement, (12,16) pour le rayonnement électromagnétique, qui sont configurés comme des antennes pour un rayonnement à haute fréquence,
- un volume échantillon, dans lequel les objets peuvent être traversés par un faisceau de rayons de rayons de mesure formés à partir du rayonnement électromagnétique de l'émetteur de rayonnement (11,16), et
- un dispositif de rotation, avec lequel le faisceau de rayons de mesure dans le volume échantillon peut être déplacé sur un arc de cercle (2) ou une trajectoire circulaire (1) autour d'un axe central (13) du volume échantillon, **caractérisé en ce que**
le volume échantillon est disposé entre deux réflecteurs (9,10) stationnaires, disposés en vis-à-vis et configurés avec au moins une partie de leur surface de réflexion en forme annulaire ou en forme de segment annulaire autour de l'axe central (13) pour le rayonnement électromagnétique, par l'intermédiaire desquels le faisceau de rayons de mesure est guidé à travers le volume échantillon dans la direction du récepteur de rayonnement (12,16).

2. Dispositif de mesures de transmissions électromagnétiques sur des objets, qui
- présente au moins un émetteur de rayonnement (11,16) pour le rayonnement électromagnétique et au moins un récepteur de rayonnement pour le rayonnement électromagnétique, qui sont configurés comme des antennes pour un rayonnement à haute fréquence,
- un volume échantillon, dans lequel les objets peuvent être traversés par un faisceau de rayons de mesure formés à partir du rayonnement électromagnétique de l'émetteur de rayonnement (11,16), et
- un dispositif de rotation, avec lequel le faisceau de rayons de mesure dans le volume échantillon peut être déplacé sur un arc de cercle (2) ou une trajectoire circulaire (1) autour d'un axe central (13) du volume échantillon,
**caractérisé en ce que**
le volume échantillon est disposé entre deux réflecteurs (9,10) stationnaires, disposés en vis-à-vis pour le rayonnement électromagnétique, par l'intermédiaire desquels le faisceau de rayons de mesure est guidé à travers le volume échantillon et ramené vers le récepteur de rayonnement, dans lequel un premier des deux réflecteurs (9), qui est situé le plus près de l'émetteur de rayonnement (11,16), est configuré avec au moins une partie de sa surface de réflexion en forme annulaire ou en forme de segment annulaire autour de l'axe central (13).

3. Dispositif selon la revendication 1,
**caractérisé en ce que**,
le dispositif de rotation présente un premier support (15) pour au moins un émetteur de rayonnement (11,16) et un deuxième support (15) pour au moins un récepteur de rayonnement (12,16), par l'intermédiaire duquel l'émetteur de rayonnement (11,16) et le récepteur de rayonnement (12,16) sont déplacés respectivement sur une trajectoire circulaire (1) autour de l'axe central (13) ou tournent rotativement autour de l'axe central (13), dans lequel l'émetteur de rayonnement (11,16) est disposé sur le premier support (15) de telle sorte qu'il oriente le rayonnement électromagnétique transversalement à l'axe central (13) sur un premier des deux réflecteurs (9), et le récepteur de rayonnement (12,16) est disposé sur le deuxième support (15) de telle sorte qu'il reçoive le rayonnement électromagnétique après le passage à travers le volume échantillon par un deuxième des deux réflecteurs (10) transversalement à l'axe central (13) .

4. Dispositif selon la revendication 3,
**caractérisé en ce que**,
la disposition présente plusieurs des émetteurs de rayonnement (16) pour former plusieurs faisceaux de rayons de mesure et plusieurs des récepteurs de rayonnement (16), qui sont disposés sur le premier et le deuxième support (15) de telle sorte que respectivement un émetteur de rayonnement (16) et un récepteur de rayonnement (16) soient disposés en vis-à-vis et une répartition de charge asymétrique soit obtenue par rapport à l'axe central (13).

5. Dispositif selon la revendication 1,
**caractérisé en ce que**,
le dispositif de rotation présente un premier et un deuxième élément de déviation de rayon rotatif (18,19) autour de l'axe central (13), dans lequel l'émetteur de rayonnement (16) et le premier élément de déviation de rayon (18) sont disposés de telle sorte que l'émetteur de rayonnement (16) oriente le rayonnement électromagnétique sur le premier élément de déviation de rayon (18) du dispositif de rotation, qui dévie le rayonnement électromagnétique au moins pendant une partie de sa rotation sur le premier des deux réflecteurs (9), alors qu'il tourne rotativement au cours de l'axe central (13), et dans lequel le récepteur de rayonnement(16) et le deuxième élément de déviation de rayon (18) sont disposés de telle sorte que le rayonnement électromagnétique réfléchi après le passage à travers le volume échantillon par un deuxième des deux réflecteurs (10) soit orienté par le deuxième élément de déviation de rayon (19) sur le récepteur de rayonnement (16), pendant qu'il tourne rotativement de manière synchrone au premier élément de déviation de rayon (18) autour de l'axe central (13) .

6. Dispositif selon une des revendications 3 à 5,
**caractérisé en ce que**
le premier réflecteur (9) présente une surface de réflexion incurvée, à travers laquelle le rayonnement électromagnétique est focalisé sur un plan focal dans le volume échantillon.

7. Dispositif selon la revendication 6,
**caractérisé en ce que**
les deux réflecteurs (9,10) sont disposés et configurés de manière symétrique par rapport au plan focal.

8. Dispositif selon une des revendications 1 et 3 à 7,
**caractérisé en ce que**
au moins un émetteur de rayonnement (16) est relié à un dispositif d'émission et au moins un récepteur de rayonnement (16) est relié à un dispositif de réception.

9. Dispositif selon une des revendications 1 et 3 à 8,
**caractérisé en ce que**
les deux réflecteurs (9,10) sont configurés symétriquement en rotation.

10. Dispositif selon la revendication 2,
**caractérisé en ce que**
le dispositif de rotation présente un support (15) pour au moins un émetteur de rayonnement (11,16), par l'intermédiaire duquel l'émetteur de rayonnement (11,16) est déplacé sur une trajectoire circulaire (1) autour de l'axe central (13) ou est tourné rotativement autour de l'axe central (13), dans lequel l'émetteur de rayonnement (11,16) est disposé sur le support (15) de telle sorte qu'il oriente le rayonnement électromagnétique transversalement à l'axe central (13) sur le premier réflecteur (9).

11. Dispositif selon la revendication 10,
**caractérisé en ce que**
le dispositif présente plusieurs émetteurs de rayonnement (16) pour former plusieurs faisceaux de rayons de mesure, qui sont disposés sur le support (15) de telle sorte qu'une répartition de charge symétrique par rapport à l'axe central (13) soit obtenue.

12. Dispositif selon la revendication 2,
**caractérisé en ce que**
le dispositif de rotation présente un élément de déviation de rayon (18) rotatif autour de l'axe central (13), dans lequel l'émetteur de rayonnement (16) et l'élément de déviation de rayon (18) sont disposés de telle sorte que l'émetteur de rayonnement (16) oriente le rayonnement électromagnétique sur l'élément de déviation de rayon (18) du dispositif de rotation, qui dévie le rayonnement magnétique au moins en partie de sa rotation sur le premier réflecteur (9), pendant qu'il tourne rotativement autour de l'axe central (13).

13. Dispositif selon une des revendications 10 à 12,
**caractérisé en ce que**
le premier réflecteur (9) présente une surface de réflexion incurvée, par l'intermédiaire de laquelle le rayonnement électromagnétique est focalisé sur un plan focal dans le volume échantillon.

14. Dispositif selon une des revendications 2 et 10 à 13,
**caractérisé en ce que**
au moins un émetteur de rayonnement (16) et un récepteur de rayonnement est relié respectivement avec un dispositif d'émission et de réception.
